# EUROPEAN PATENT APPLICATION

(11) **EP 4 148 598 A1**
(43) Date of publication of application: **15.03.2023**
(21) Application number: 22194785.6
(22) Date of filing: 09.09.2022
(51) Int. Cl.: G06F 16/93, G06F 16/907

(54) **DOCUMENT RETRIEVAL SUPPORT SYSTEM, DOCUMENT RETRIEVAL SUPPORT METHOD, AND DOCUMENT RETRIEVAL SUPPORT PROGRAM**

(30) Priority: 14.09.2021 JP 2021149796
(71) Applicant: SCREEN Holdings Co., Ltd., Kyoto 602-8585 (JP)
(72) Inventor: TERADA, Manri, Kyoto, 602-8585 (JP); KASUBUCHI, Kiyotaka, Kyoto, 602-8585 (JP); YOSHIDA, Akiko, Kyoto, 602-8585 (JP); UMEHARA, Koki, Kyoto, 602-8585 (JP); SUMIYA, Yuki, Kyoto, 602-8585 (JP)
(74) Representative: Goddar, Heinz J.

(57) **Abstract**

Training data in which tag information is assigned to some document files extracted from a plurality of document files to be retrieved is acquired by a training data acquirer. A tag estimation model for estimating tag information to be assigned to a document file is constructed by a constructor by applying the acquired training data to a Transformer machine learning model on which learning has been carried out in advance using a corpus. The tag information is assigned to each of the plurality of document files to be retrieved by an assigner using the constructed tag estimation model.

## Description

### BACKGROUND

### Technical Field

The present invention relates to a document retrieval support system for supporting retrieval of a document, a document retrieval support method, and a document retrieval support program.

### Description of Related Art

In recent years, computerized documents are utilized to acquire various information on the Internet and the like. A user retrieves desired tag information, so that the user can select a document to which the tag information is assigned and utilize the selected document.

In a document retrieval learning system described in JP 2018-195222 A, for example, a content read by an electronic document reader is displayed on a content display. When the user drags and selects a character string in the content with a mouse or the like, and clicks a retrieval button, the selected character string is transferred to a search engine. Thus, documents related to the selected character string are retrieved by the Internet, and a listing of results of the retrieval is displayed on a web browser display.

### SUMMARY

It is necessary to previously assign tag information to a document to be retrieved in order to enable the retrieval of the document. However, since there are a huge number of documents to be retrieved, a worker who assigns tag information to the documents bears a great burden. Also, the name (label) of the tag information is not necessarily unified but mostly different for each worker. As such, a significant cost is generated for assignment, maintenance or consolidation of the tag information. Also, a considerable period of time is required until a newly created document becomes retrievable.

It is also considered that the tag information of a document is estimated using AI (artificial intelligence) and is automatically assigned to the document. However, in a case where the number of training data is not sufficient, the tag information cannot be estimated with high accuracy. As such, a large amount of training data are required to assign the tag information to the document using Al. Thus, a significant cost is generated for creating the large amount of training data.

An object of the present invention is to provide a document retrieval support system that enables retrieval of a document while suppressing an increase in cost, a document retrieval support method, and a document retrieval support program.
(1) A document retrieval support system according to one aspect of the present invention includes a training data acquirer that acquires training data in which tag information is assigned to some document files extracted from a plurality of document files to be retrieved, a constructor that constructs a tag estimation model for estimating tag information to be assigned to a document file by applying the training data acquired by the training data acquirer to a Transformer machine learning model on which learning has been carried out in advance using a corpus, and an assigner that assigns the tag information to each of the plurality of document files to be retrieved using the tag estimation model constructed by the constructor.

In this document retrieval support system, since the leaning is carried out on the Transformer machine learning model in advance using the corpus, the tag information estimation model capable of estimating the tag information with high accuracy is constructed even in a case where the number of training data is small. In this case, it is unnecessary to acquire a large amount of training data. Thus, it is possible to assign the tag information to each of the plurality of document files to be retrieved using the tag information estimation model constructed using not all but some of the plurality of document files to be retrieved as the training data.

With this configuration, a user need not carry out an operation of assigning the tag information to a huge number of document files. Also, there is no expression fluctuation in the label of the tag information. As such, very little cost is generated for assignment, maintenance or consolidation of the tag information. This makes it possible to retrieve documents while suppressing an increase in cost. Also, since the tag information is immediately assigned to a newly created document file, it is possible to immediately retrieve the newly created document file.

(2) The training data may indicate a relationship between a content of a document file being an explanatory variable and tag information assigned to the document file being an objective variable, and the tag estimation model may be constructed by the Transformer machine learning model learning the relationship between the content of the document file and the tag information assigned to the document file based on the training data. In this case, the tag estimation model can be easily constructed.

(3) The Transformer machine learning model may be BERT (Bidirectional Encoder Representations from Transformers). In this case, it is possible to easily make the machine learning model learn using the corpus.

(4) The document retrieval support system may further include a creator that creates a tag information listing indicating a listing of candidates of tag information to be assigned to the plurality of document files to be retrieved, and an extractor that extracts some document files from the plurality of document files to be retrieved, and the training data acquirer may assign any of the tag information in the tag information listing created by the creator to the document files extracted by the extractor, to generate the training data. In this case, the training data can be easily generated from those extracted from the plurality of document files to be retrieved.

(5) The document retrieval support system may further include a retriever that receives, after the tag information is assigned to each of the plurality of document files to be retrieved by the assigner, an input of a character string, retrieves a document file matching the character string from the plurality of document files to be retrieved, and outputs a result screen indicating a result of the retrieval. In this case, the user inputs a desired character string, so that the user can easily utilize a document file matching the character string.

(6) The result screen output by the retriever may further display tag information that is accessible in connection with the retrieved document file, and the retriever may retrieve a document file to which tag information selected by the user is assigned among the tag information displayed on the result screen, and output the result screen indicating the result of the retrieval. In this case, the user selects desired tag information displayed on the result screen, so that the user can easily utilize a document file to which the desired tag information is assigned.

(7) The accessible tag information may include tag information assigned to the document file retrieved by the retriever and a candidate of tag information that belongs to a same hierarchy as that of the tag information assigned to the retrieved document file. In this case, the accessible tag information can be easily displayed on the result screen.

(8) The document retrieval support system may further include a receiver that receives an instruction for edition of the tag information assigned to any of the plurality of document files to be retrieved, and an editor that edits the tag information of the document file instructed to the receiver and also edits tag information of another document file to be retrieved, and the assigner may update the tag information assigned to the document file to tag information edited by the editor. With this configuration, even in a case where inappropriate tag information is assigned to a document file, the inappropriate tag information assigned to the document file can be appropriately revised.

(9) The editor may selectively edit the tag information of the document file to be retrieved based on a predetermined threshold value. In this case, the tag information of the plurality of document files can be selectively edited all at once based on the threshold value.

(10) The result screen output by the retriever may further display GUI (Graphical User Interface) operated by the user, and the receiver may receive the instruction for the edition of the tag information assigned to any of the plurality of document files to be retrieved in response to the operated GUI. In this case, the user can provide an instruction for edition of the tag information assigned to a desired document file.

(11) The editor may update the tag estimation model constructed by the constructor based on a result of the edition. In this case, appropriate tag information can be easily assigned to the document file.

(12) A document retrieval support method according to another aspect of the present invention includes acquiring training data in which tag information is assigned to some document files extracted from a plurality of document files to be retrieved, constructing a tag estimation model for estimating tag information to be assigned to a document file by applying the acquired training data to a Transformer machine learning model on which learning has been carried out in advance using a corpus, and assigning the tag information to each of the plurality of document files to be retrieved using the constructed tag estimation model.

With this document retrieval support method, it is unnecessary to acquire a large amount of training data. Also, the user need not carry out an operation of assigning the tag information to a huge number of document files. Furthermore, there is no expression fluctuation in the label of the tag information. As such, very little cost is generated for assignment, maintenance or consolidation of the tag information. This makes it possible to retrieve documents while suppressing an increase in cost. Also, since the tag information is immediately assigned to a newly created document file, it is possible to immediately retrieve the newly created document file.

(13) A document retrieval support program executable by a processor according to still another aspect of the present invention causes the processor to execute a process of acquiring training data in which tag information is assigned to some document files extracted from a plurality of document files to be retrieved, a process of constructing a tag estimation model for estimating tag information to be assigned to a document file by applying the acquired training data to a Transformer machine learning model on which learning has been carried out in advance using a corpus, and a process of assigning the tag information to each of the plurality of document files to be retrieved using the constructed tag estimation model.

With this document retrieval support program, it is unnecessary to acquire a large amount of training data. Also, the user need not carry out an operation of assigning the tag information to a huge number of document files. Furthermore, there is no expression fluctuation in the label of the tag information. As such, very little cost is generated for assignment, maintenance or consolidation of the tag information. This makes it possible to retrieve documents while suppressing an increase in cost. Also, since the tag information is immediately assigned to a newly created document file, it is possible to immediately retrieve the newly created document file.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a diagram showing a configuration of a document retrieval support system according to one embodiment of the present invention;
Fig. 2 is a diagram showing configurations of a tag estimation device and a retrieval device of Fig. 1;
Fig. 3 is a diagram showing a tag information listing created by a creator of Fig. 2;
Fig. 4 is a diagram showing one example of a method of designating document files extracted by an extractor of Fig. 2;
Fig. 5 is a diagram showing a table including the document files extracted by the extractor of Fig. 2;
Fig. 6 is a diagram showing generated training data;
Fig. 7 is a diagram for explaining an example of creation of training data having a multi-label structure;
Fig. 8 is a diagram for explaining the example of creation of the training data having the multi-label structure;
Fig. 9 is a diagram showing one example of a retrieval screen;
Fig. 10 is a diagram showing one example of a result screen;
Fig. 11 is a diagram showing one example of an edition screen;
Fig. 12 is a diagram showing a first display example of a file field of the result screen;
Fig. 13 is a diagram showing a second display example of the file field of the result screen;
Fig. 14 is a diagram showing a third display example of the file field of the result screen;
Fig. 15 is a diagram showing the third display example of the file field of the result screen;
Fig. 16 is a diagram showing a fourth display example of the file field of the result screen;
Fig. 17 is a diagram showing a fifth display example of the file field of the result screen;
Fig. 18 is a diagram showing one example of the edition screen in a case where training data has the multi-label structure;
Fig. 19 is a flowchart showing a tag estimation process performed by the tag estimation device of Fig. 2;
Fig. 20 is a flowchart showing a retrieval process performed by the retrieval device of Fig. 2; and
Fig. 21 is a flowchart showing the retrieval process performed by the retrieval device of Fig. 2.

### DETAILED DESCRIPTION

### (1) Configuration of Document Retrieval Support System

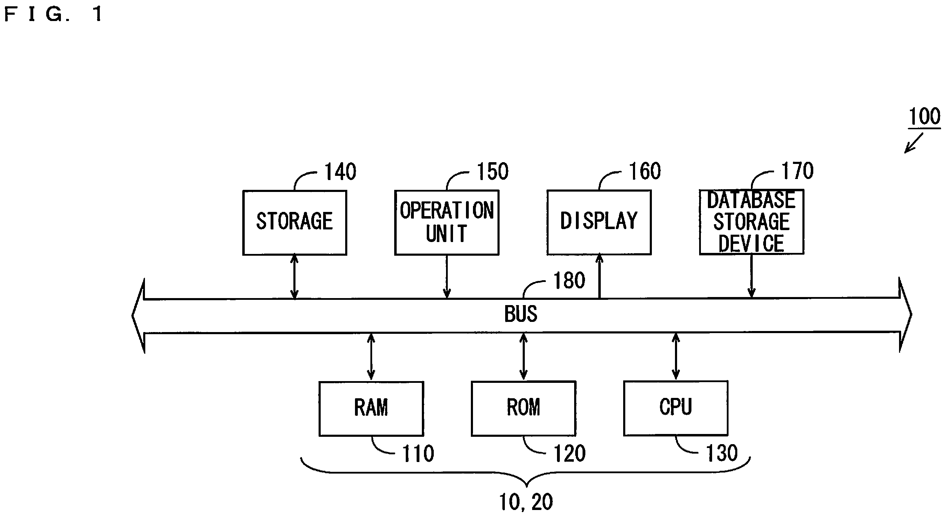

A document retrieval support system, a document retrieval support method, and a document retrieval support program according to embodiments of the present invention will be described below with reference to the drawing. Fig. 1 is a diagram showing a configuration of a document retrieval support system according to one embodiment of the present invention. As shown in Fig. 1, a document retrieval support system 100 is implemented by an information processing apparatus such as a personal computer and includes a RAM (Random Access Memory) 110, a ROM (Read Only Memory) 120, a CPU (Central Processing Unit) 130, a storage 140, an operation unit 150, a display 160, and a database storage device 170.

The RAM 110, the ROM 120, the CPU 130, the storage 140, the operation unit 150, the display 160, and the database storage device 170 are connected to a bus 180. The RAM 110, the ROM 120, and the CPU 130 constitute a tag estimation device 10 and a retrieval device 20. While the tag estimation device 10 and the retrieval device 20 are constituted by the common document retrieval support system 100 in this embodiment, embodiments are not limited to this. The tag estimation device 10 and the retrieval device 20 may be constituted by different document retrieval support systems 100 as far as the tag estimation device 10 and the retrieval device 20 are connectable to each other.

The RAM 110 is composed of a volatile memory, for example, and is used as a working area of the CPU 130. The ROM 120 is composed of a non-volatile memory, for example, and stores a document retrieval support program. The document retrieval support program includes a tag estimation program and a retrieval program. The CPU 130 performs an estimation process as the tag estimation device 10 by executing the estimation program stored in the ROM 120. Also, the CPU 130 performs a retrieval process as the retrieval device 20 by executing the retrieval program stored in the ROM 120. Details of the tag estimation process and the retrieval process will be described below.

The document retrieval support program may be stored in the storage 140 rather than the ROM 120. Alternatively, the document retrieval support program may be provided in a format in which the document retrieval support program is stored in a non-transitory computer readable storage medium and may be installed in the ROM 120 or the storage 140. Alternatively, in a case where the document retrieval support system 100 is connected to a network such as the Internet, a document retrieval support program distributed from a server on the network (including a cloud server) may be installed in the ROM 120 or the storage 140.

The storage 140 includes a storage medium such as a hard disk, a semiconductor memory, an optical disk, a magnetic disk or a memory card and stores a Transformer machine learning model and the like for estimating tag information to be assigned to an arbitrary document file. Learning has been carried out on the Transformer machine learning model in advance using a large-scale corpus. In this example, the Transformer machine learning model is BERT (Bidirectional Encoder Representations from Transformers).

The operation unit 150 includes, for example, a pointing device such as a mouse, a keyboard or a touch panel. A user can make a predetermined selection or provide a predetermined instruction to the tag estimation device 10 or the retrieval device 20 by operating the operation unit 150. The display 160 includes a liquid crystal display, for example, and displays a predetermined GUI (Graphical User Interface), a result of a retrieval process, or the like. The database storage device 170 includes a large capacity storage device such as a server and stores, in advance, a document file indicating a large number of documents to be retrieved.

### (2) Configuration of Tag Estimation Device

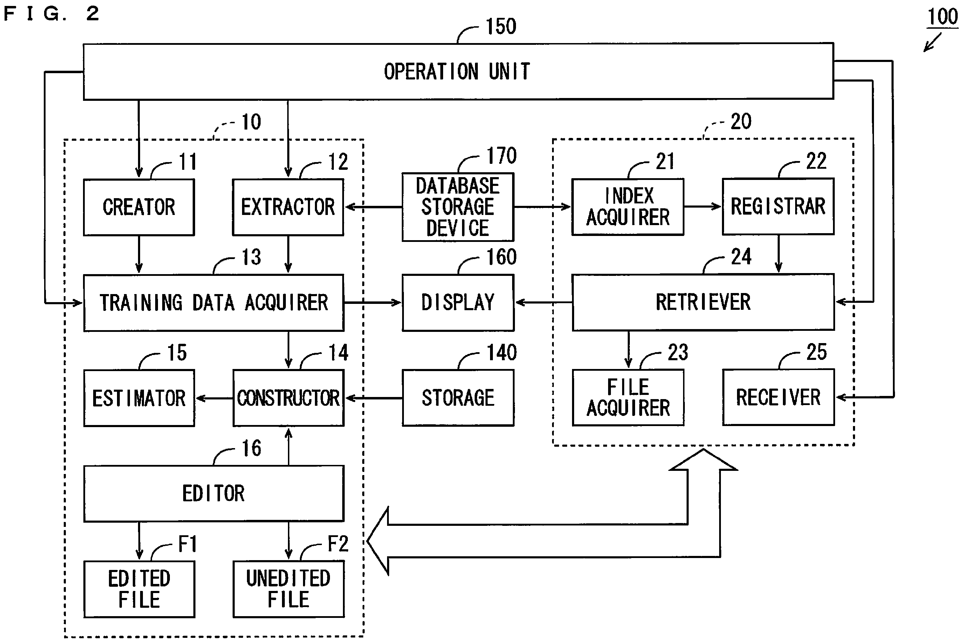

Fig. 2 is a diagram showing the configurations of the tag estimation device 10 and the retrieval device of Fig. 1. As shown in Fig. 2, the tag estimation device 10 includes a creator 11, an extractor 12, a training data acquirer 13, a constructor 14, an estimator 15, and an editor 16 as function units. The function units of the tag estimation device 10 are implemented by the CPU 130 of Fig. 1 executing the tag estimation program stored in the ROM 120 or the like. Some or all of the function units of the tag estimation device 10 may be implemented by hardware such as an electronic circuit.

The creator 11 creates a listing of candidates of tag information to be assigned to a document file to be retrieved (referred to as a tag information listing) in response to an operation of the operation unit 150. In the tag information listing, the candidates of tag information are arranged to be classified in a hierarchical structure. The user can perform an operation for creating the tag information listing using the operation unit 150.

The extractor 12 extracts some document files for use in generation of training data among the large number of document files stored in the database storage device 170 in response to the operation of the operation unit 150. The user can designate some document files for use in generation of training data using the operation unit 150.

The training data acquirer 13 assigns any of the tag information in the tag information listing created by the creator 11 to each document file extracted by the extractor 12, to generate each document file as training data for use in construction of a tag estimation model described below. The training data indicates a relationship between the content of a document file that is an explanatory variable and the tag information assigned to the document file that is an objective variable.

The constructor 14 acquires the BERT stored in the storage 140. Also, the constructor 14 makes the BERT learn the relationship between the content of the document file and the tag information assigned to the document file using the plurality of training data generated by the training data acquirer 13. Thus, the BERT is constructed as the tag estimation model.

The estimator 15 estimates the tag information of a document file designated from the retrieval device 20 using the tag estimation model constructed by the constructor 14, and transmits a result of the estimation to the retrieval device 20. The estimator 15 also evaluates estimation probability (reliability) of the estimated tag information. As described above, since the learning is carried out in advance on the BERT using the large-scale corpus, the tag information can be estimated with high accuracy even in a case where the number of training data is relatively small. The number of training data for one piece of tag information may be approximately ten in this example.

In a case where the editor 16 is required to edit the tag information assigned to any of the document files from the retrieval device 20, the editor 16 edits the tag information assigned to the document file to create an edited file F1. Also, the editor 16 edits tag information as to another document file to be retrieved (unedited file F2) similarly to the edited file F1. The editor 16 can selectively edit the tag information as to the unedited file F2 all at once based on a threshold value of estimation probability. The editor 16 transmits the edited tag information to the retrieval device 20 and also updates the tag estimation model constructed by the constructor 14 based on a result of the edition.

In some cases, disused tag information or tag information whose name is changed is discovered by maintenance of tag information. Also, the estimation probability of the tag information estimated by the estimator 15 is not necessarily 100 % and, therefore, erroneous tag information is estimated in some cases. Further, new tag information that has not been present is desired to be assigned in some cases. Even in such cases, the editor 16 edits the tag information, so that appropriate tag information can be assigned to the document. Moreover, since it is unnecessary to carry out relearning of a tag estimation model for estimating new tag information, occurrence of downtime can be prevented.

### (3) Configuration of Retrieval Device

As shown in Fig. 2, the retrieval device 20 includes an index acquirer 21, a registrar 22, a file acquirer 23, a retriever 24, and a receiver 25 as function units. The function units of the retrieval device 20 are implemented by the CPU 130 of Fig. 1 executing the retrieval program stored in the ROM 120 or the like. Some or all of the function units of the retrieval device 20 may be implemented by hardware such as an electronic circuit.

The index acquirer 21 crawls the database storage device 170 to acquire index information of each document file. The index information includes a path, a name, a creator, a creation date, a content or the like of the document file stored in the database storage device 170. Each time a new document file is added to the database storage device 170, the index acquirer 21 further acquires index information of the added document file. The registrar 22 registers the index information acquired by the index acquirer 21 in the retriever 24.

Also, as described below, the registrar 22 receives the tag information estimated by the estimator 15 of the tag estimation device 10 for each document file. The registrar 22 further registers the tag information received from the estimator 15 for each document file in the retriever 24 as part of the index information of the document file. Thus, the tag information is assigned to the document file, so that the document file can be retrieved. Accordingly, the registrar 22 functions as an assigner that assigns the tag information to the document file.

Moreover, as described below, the registrar 22 receives the tag information edited by the editor 16 of the estimation device 10 for each document file. The registrar 22 updates the tag information registered in the retriever 24 to the edited tag information received from the editor 16.

The file acquirer 23 acquires a document file to be retrieved based on the index information except for the tag information registered in the retriever 24 and designates the acquired document file in the tag estimation device 10. In this case, the tag information of the designated document file is estimated by the estimator 15 of the tag estimation device 10. The tag information estimated by the estimator 15 is transmitted to the registrar 22 as described above.

The retriever 24 causes the display 160 to display a predetermined retrieval screen after the tag information of each document file is registered by the registrar 22. The user can input a desired character string to the retrieval screen by operating the operation unit 150. The retriever 24 retrieves a document file to which tag information matching the character string input to the retrieval screen is assigned, and causes the display 160 to display a result screen indicating a result of the retrieval.

The receiver 25 receives an instruction for edition of the tag information from the result screen displayed on the display 160. The user can provide an instruction for edition of the tag information assigned to a desired document file by operating the operation unit 150. While a threshold value of estimation probability for use in the edition of the tag information is a default value in default setting, the user can also change the setting of the threshold value of the estimation probability by operating the operation unit 150.

In a case where the receiver 25 receives the instruction for edition of the tag information, the receiver 25 requires the tag estimation device 10 to edit the tag information assigned to the document file. In this case, the tag information assigned to the document file is edited by the editor 16 of the tag estimation device 10, and also the tag information assigned to another document file is similarly edited. The tag information edited by the editor 16 is transmitted to the registrar 22 as described above.

### (4) Example of Operation of Tag Estimation Device

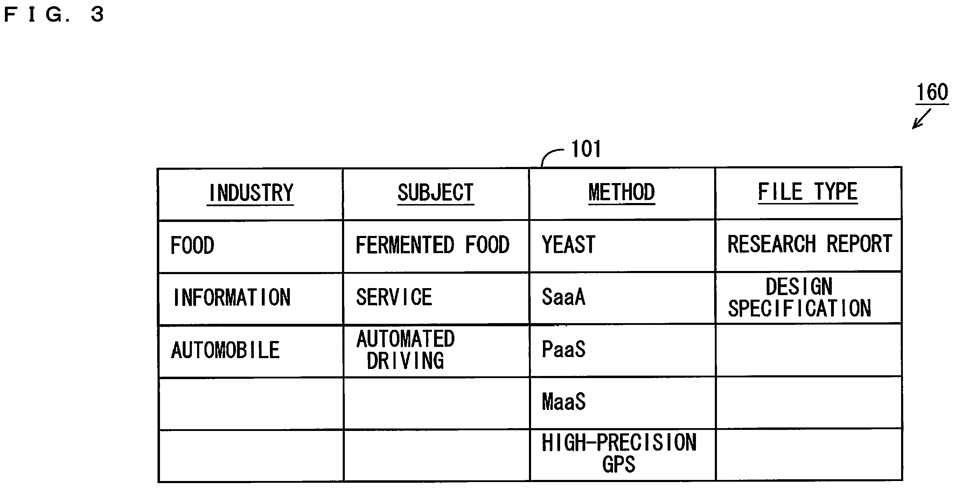

Fig. 3 is a diagram showing the tag information listing created by the creator 11 of Fig. 2. As shown in Fig. 3, the creator 11 creates the tag information listing 101 using a table displayed on the display 160 based on the operation of the operation unit 150 by the user.

In the example of the tag information listing 101 of Fig. 3, tag information includes "Industry," "Subject," "Method," and "File Type" as items. A label of the item "Industry" includes "Food," "Information," and "Automobile." A label of the item "Subject" includes "Fermented Food," "Service," and "Automated Driving." A label of the item "Method" includes "Yeast," "SaaS," "PaaS," "MaaS," and "High-precision GPS." A label of the item "File Type" includes "Research Report" and "Design Specification."

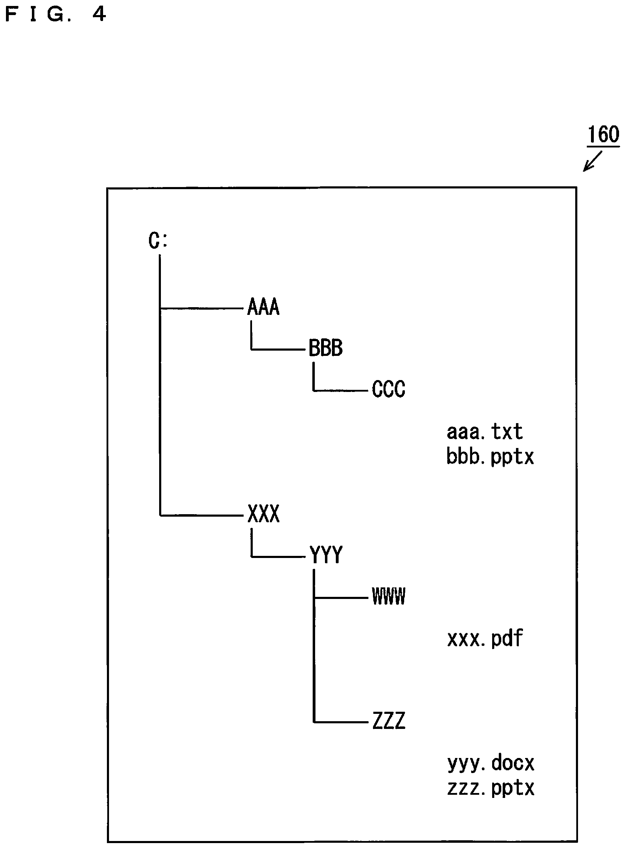

Fig. 4 is a diagram showing one example of a method of designating document files extracted by the extractor 12 of Fig. 2. As shown in Fig. 4, a document file is extracted by designating a path of a destination of the document file on the display 160. In the example of Fig. 4, the user designates a "folder CCC" of a "folder BBB" of a "folder AAA" of a "C drive" by operating the operation unit 150. Also, the user designates a "folder WWW" and a "folder ZZZ" of a "folder YYY" of a "folder XXX" of the "C drive" by operating the operation unit 150.

In this case, the extractor 12 extracts document files "aaa. txt" and "bbb. pptx" saved in the "folder CCC." Also, the extractor 12 extracts a document file "xxx. pdf" saved in the "folder WWW." Further, the extractor 12 extracts document files "yyy. docx" and "zzz. pptx" saved in the "folder ZZZ."

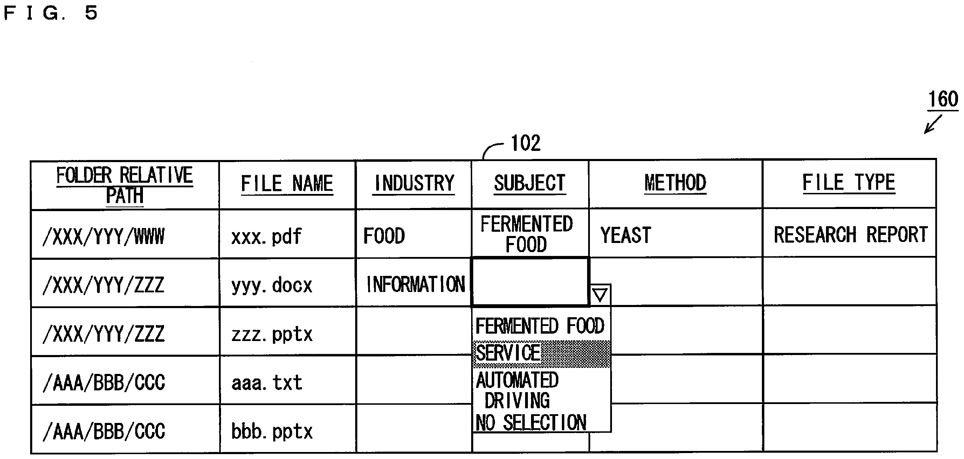

The paths designated and the document files extracted in Fig. 4 are displayed in a table format on the display 160 in association with the tag information listing 101 created in Fig. 3. Fig. 5 is a diagram showing a table including the document files extracted by the extractor 12 of Fig. 2. As shown in Fig. 5, the user selects the label of each item corresponding to each document file in a table 102 from among the labels included in the tag information listing 101 by operating the operation unit 150. In the example of Fig. 5, the label of each item is selected from a pulldown menu corresponding to the tag information listing 101. Some of the labels may be automatically selected.

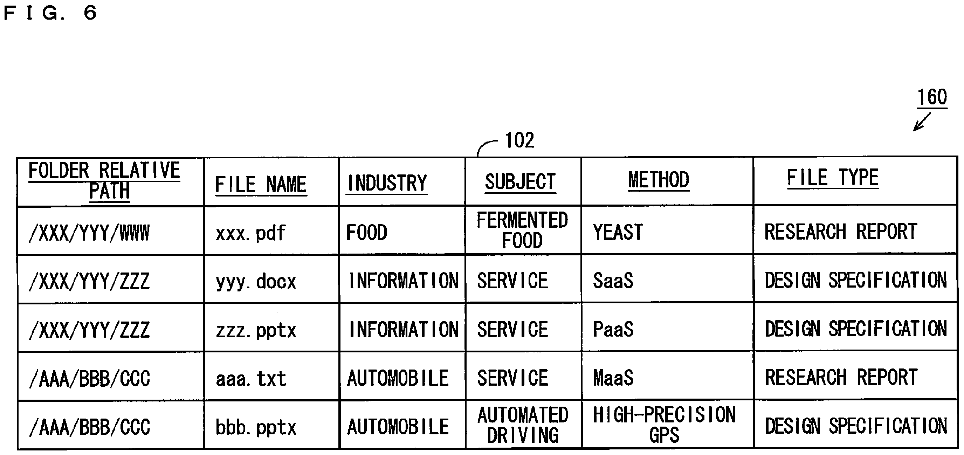

The selected label of tag information is assigned to each document file by the training data acquirer 13 of Fig. 2. Thus, each document file is generated as training data. Fig. 6 is a diagram showing the generated training data. In the example of Fig. 6, five training data are generated from the extracted five document files, respectively. The labels "Food," "Fermented Food," "Yeast," and "Research Report" are assigned to the training data "xxx. pdf."

Similarly, the labels "Information," "Service," "SaaS," and "Design Specification" are assigned to the training data "yyy. docx." The labels "Information," "Service," "PaaS," and "Design Specification" are assigned to the training data "zzz. pptx." The labels "Automobile," "Service," "MaaS," and "Research Report" are assigned to the training data "aaa. txt." The labels "Automobile," "Automated Driving," "High-precision GPS," and "Design Specification" are assigned to the training data "bbb. pptx."

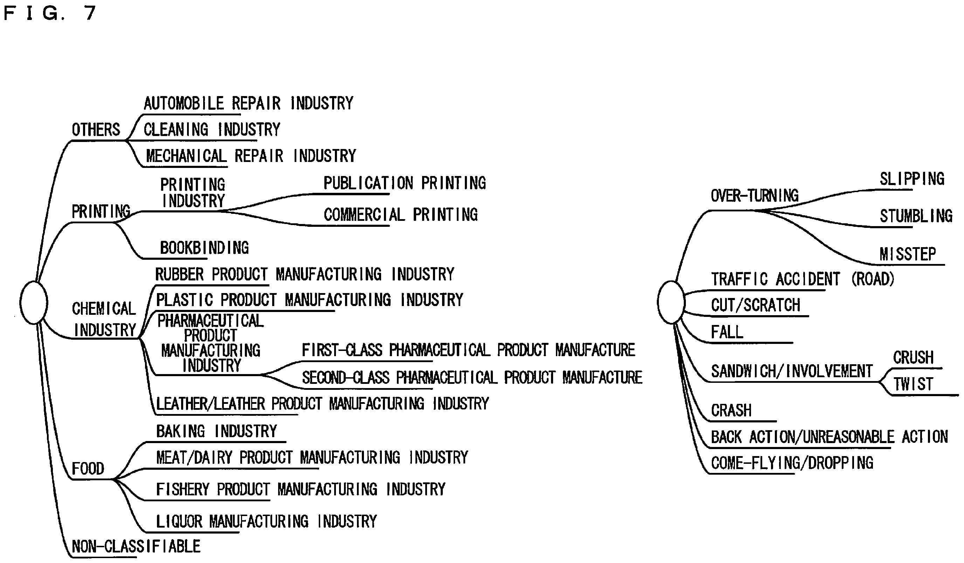

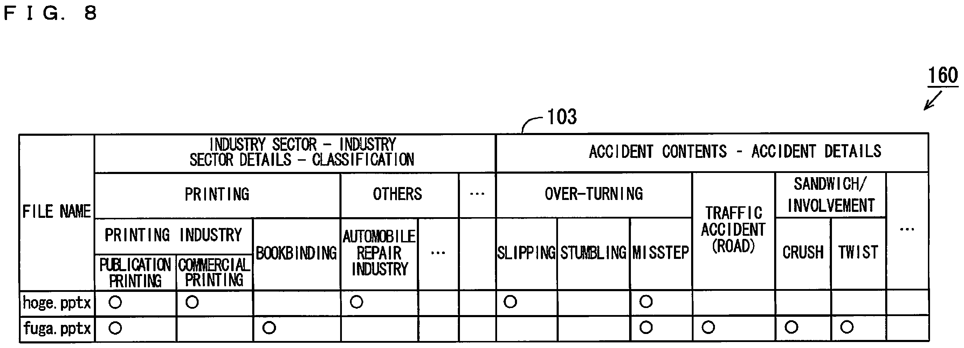

A plurality of labels (multi-labels) can also be selected for one item. Figs. 7 and 8 are diagrams for explaining an example of creation of training data having a multi-label structure. On the left side of Fig. 7, the structure of "Industry Sector" classified in "Industry" is described in a tree shape. Similarly, on the right side of Fig. 7, the structure of "Accident Contents" classified in "Worker Injury" is described in a tree shape.

As shown in Fig. 7, the "Industry Sector" of a label "Others" in the item "Industry Sector" is further classified into "Automobile Repair Industry," "Cleaning Industry" or "Mechanical Repair Industry." Also, the "Accident Contents" of a label "Over-turning" in the item "Accident Contents" is further classified into "Slipping," "Stumbling" or "Misstep." In a case where the training data having the multi-label structure of Fig. 7 is created, a table 103 of Fig. 8 is displayed on the display 160 in place of the table 102 of Fig. 5.

In the table 103 of Fig. 8, based on the tag information listing 101 created by the creator 11, one or more labels that can be assigned to each item of the document file extracted by the extractor 12 are displayed to correspond to the document file. The user selects one or more labels of each item corresponding to each document file on the table 103 by operating the operation unit 150. In the example of Fig. 8, circles "○" are filled in cells in the table 103 that correspond to the selected labels. With this configuration, it is possible to assign the plurality of labels to each item corresponding to each document file. Thus, the training data having the multi-label structure can be created.

### (5) Example of Operation of Retrieval Device

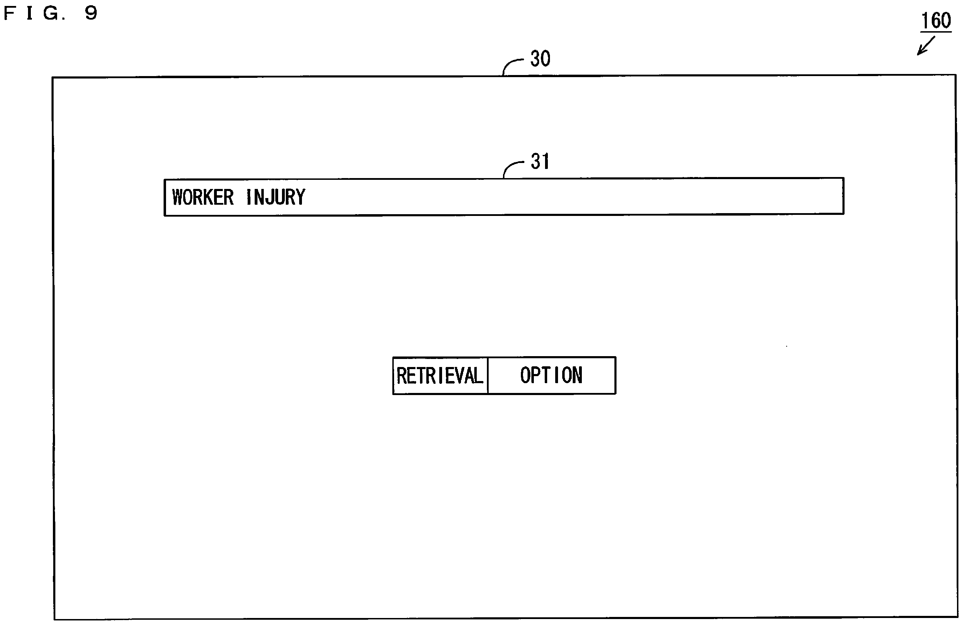

After the tag information of each document file is registered in the retriever 24 of Fig. 2 as part of index information, a retrieval screen is displayed on the display 160 by the retriever 24. Fig. 9 is a diagram showing one example of the retrieval screen. As shown in Fig. 9, the retrieval screen 30 includes an entry field 31. The user can input a desired character string to the entry field 31 by operating the operation unit 150 of Fig. 2. The character string may be a word or a sentence.

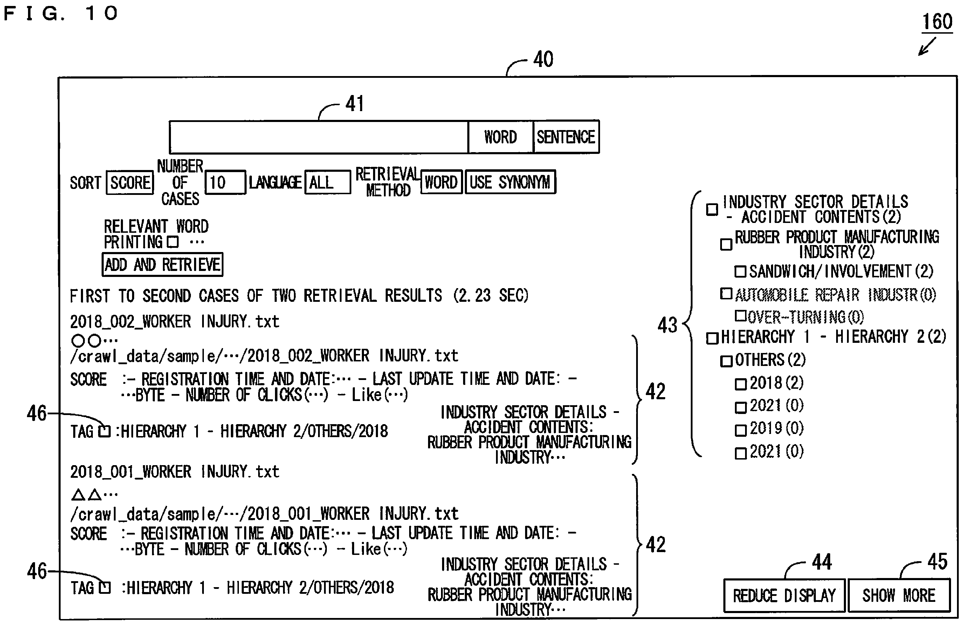

When the character string is input to the entry field 31, a document file to which tag information matching the input character string is assigned is retrieved by the retriever 24, and a result screen indicating a result of the retrieval is displayed on the display 160. In the example of Fig. 9, a word "Worker Injury" is input to the entry field 31. Fig. 10 is a diagram showing one example of the result screen. As shown in Fig. 10, the result screen 40 includes an entry field 41, a file field 42, a tag retrieval field 43, and buttons 44, 45.

The entry field 41 has a function similar to that of the entry field 31 of the retrieval screen 30. The user can also input a desired character string to the entry field 41. As such, after the tag information of each document file is registered as part of index information, the retriever 24 may cause the display 160 to display the result screen 40 rather than the retrieval screen 30.

A beginning of a document based on the retrieved document file, a path and index information (including tag information) of the document file, etc. are displayed in the file field 42. Also, an edition icon 46 is displayed in the file field 42. The edition icon 46 is a GUI operated to receive edition of tag information. In a case where a plurality of document files are retrieved, a plurality of file fields 42 are arranged to correspond to the plurality of document files, respectively, and arranged in a line in an up-and-down direction.

Tag information that is accessible in connection with the retrieved document file is displayed in a tree shape in the tag retrieval field 43. The accessible tag information includes tag information assigned to the retrieved document file and tag information that belongs to a same hierarchy as that of the tag information assigned to the retrieved document file. Also, a check box is displayed on the left side of each tag information, and the number of relevant cases of each tag information is displayed within brackets on the right side of each tag information. The tag information with the number of relevant cases being zero is displayed in a gray out status.

The user operates the operation unit 150 to check the check box corresponding to desired tag information and operate the button 44, so that only the tag information corresponding to the checked check box is displayed in the tag retrieval field 43. Also, the user operates the operation unit 150 to operate the button 45, so that all of the accessible tag information are displayed in the tag retrieval field 43.

Also, the user operates the operation unit 150 to select desired tag information, so that a document file to which the selected tag information is assigned is retrieved by the retriever 24, and a result screen indicating a result of the retrieval is displayed on the display 160. Thus, the user can retrieve the document file by selecting only the tag information.

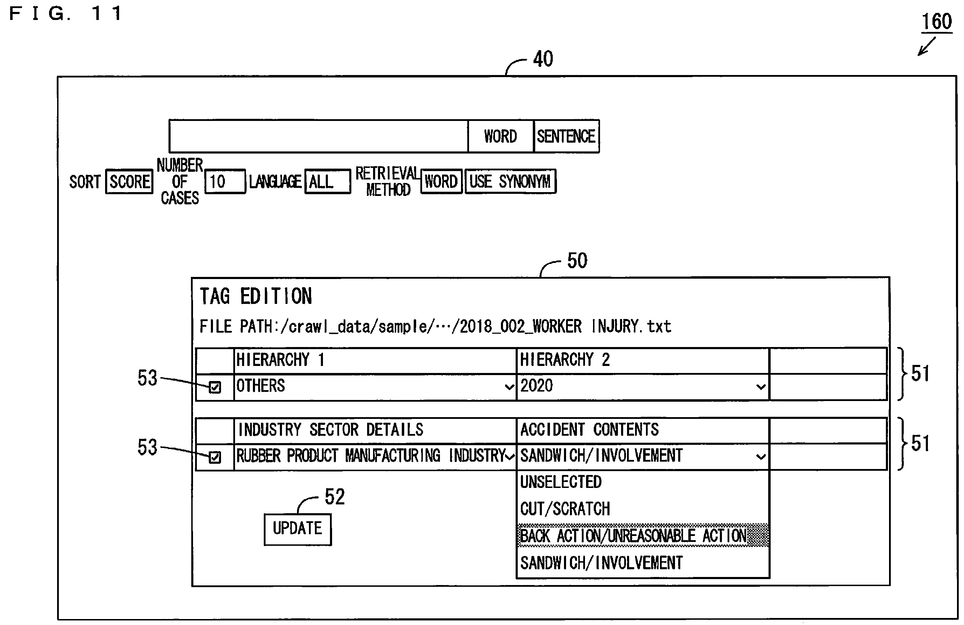

Further, the user operates the operation unit 150 to operate the edition icon 46 of a desired file field 42, so that a document file corresponding to the file field 42 is selected. Also, an edition screen for editing the tag information assigned to the selected document file is displayed as a pop-up screen. Fig. 11 is a diagram showing one example of the edition screen. As shown in Fig. 11, the edition screen 50 includes a tag edition field 51 and a button 52.

The tag information assigned to the selected document file is displayed for each hierarchy of the item. Also, a check box 53 is displayed in the tag edition field 51. In a case where a plurality of tag information are assigned to the selected document file, a plurality of tag edition fields 51 are arranged to correspond to the plurality of tag information, respectively, and arranged in a line in the up-and-down direction.

The user operates the operation unit 150 to uncheck the check box 53 of a desired tag edition field 51 and operate the button 52, so that the tag information corresponding to the unchecked check box 53 is deleted from the selected document file. On the other hand, the user operates the operation unit 150 to check the check box 53 of the desired tag edition field 51 and operate the button 52, so that the tag information corresponding to the checked check box 53 is added to the selected document file.

Also, the user operates the operation unit 150 to change a desired label of the tag information in the desired tag edition field 51 and operate the button 52, so that the label of the tag information assigned to the selected document file is updated to the changed label. In the example of Fig. 11, "Back Action/Unreasonable Action" as a label of the item "Accident Contents" in the tag information is selected from the pulldown menu corresponding to the tag information listing 101 of Fig. 3. Thus, a label "Sandwich/Involvement" of the item "Accident Contents" is changed to the label "Back Action/Unreasonable Action."

In a case where the aforementioned operation is executed, the editor 16 of the tag estimation device 10 of Fig. 2 is required to edit the tag information. The tag information assigned to the selected document file is edited by the editor 16, so that the edited file F1 is created. Also, the tag information as to the other unedited file F2 is also edited based on the threshold value of the estimation probability similarly to the edited file F1.

For example, given that the estimation probabilities of the labels Sandwich/Involvement" assigned to first to fourth document files as the unedited files F2 are 85 %, 50 %, 70 %, and 55 %, respectively. When the threshold value of the estimation probability is 60 %, the label of the item "Accident Contents" as to each of the first and third document files, to which the label is assigned with an estimation probability equal to or more than the threshold value, is changed to "Back Action/Unreasonable Action." On the other hand, the label of the item "Accident Contents" as to each of the second and fourth document files, to which the label is assigned with an estimation probability less than the threshold value, is changed to "No Selection."

### (6) Other Display Examples

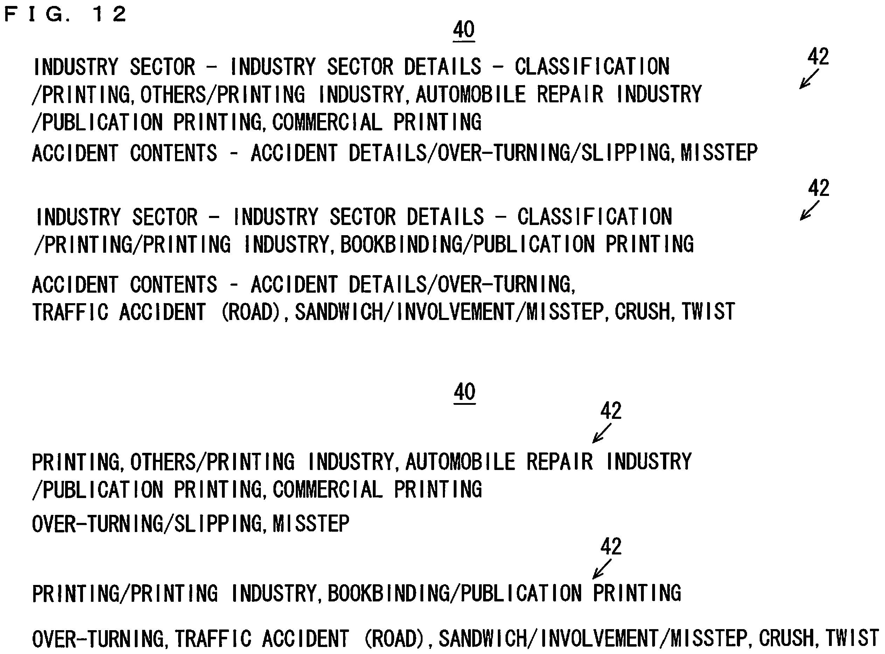

Fig. 12 is a diagram showing a first display example of the file field 42 of the result screen 40. As shown in an upper part of Fig. 12, in the first display example, tag information that is organized in a line by type is displayed in each file field 42. In the example of Fig. 12, the label of the item "Industry Sector" described on the left side of Fig. 7 is organized in a line, and the label of the item "Accident Contents" described on the right side of Fig. 7 is organized in another line. As shown in a lower part of Fig. 12, display of a header of the tag information may be left out. In this case, the number of characters displayed in the file field 42 is reduced and, therefore, readability of the file field 42 is increased.

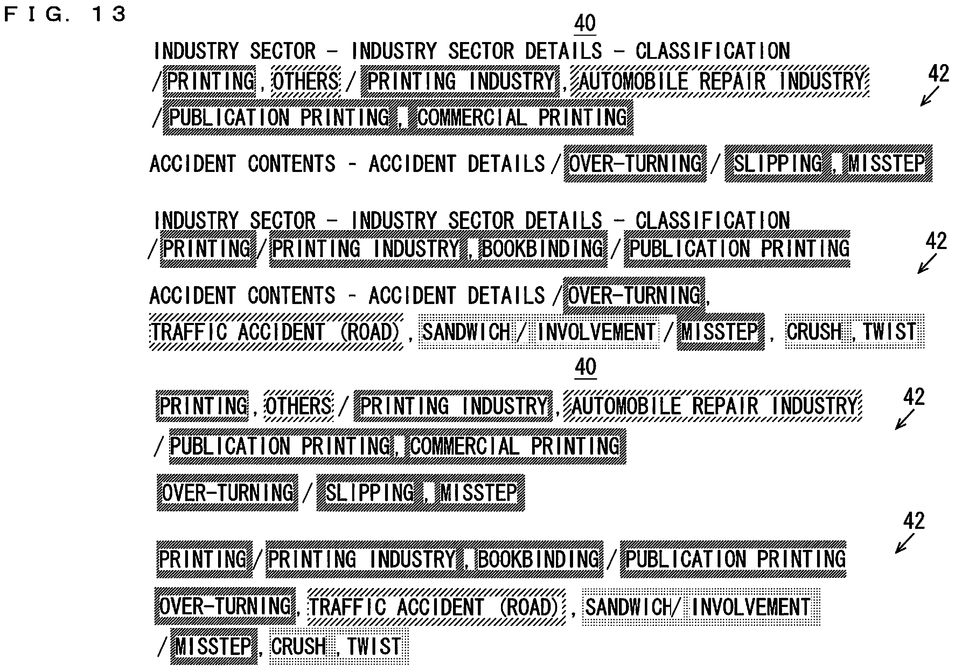

Fig. 13 is a diagram showing a second display example of the file field 42 of the result screen 40. As shown in an upper part of Fig. 13, in the second display example, similarly to the first display example, tag information that is organized in a line by type is displayed in each file field 42. Here, labels in a parent-child relationship are displayed in the same color. In this case, the user can easily recognize the parent-child relationship among the labels of the tag information. As shown in a lower part of Fig. 13, display of a header of the tag information may be left out.

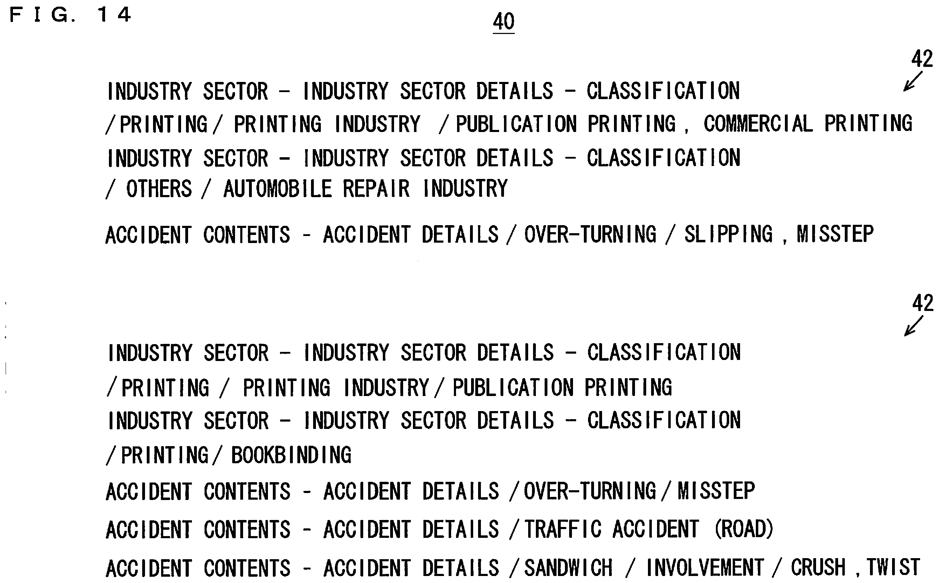

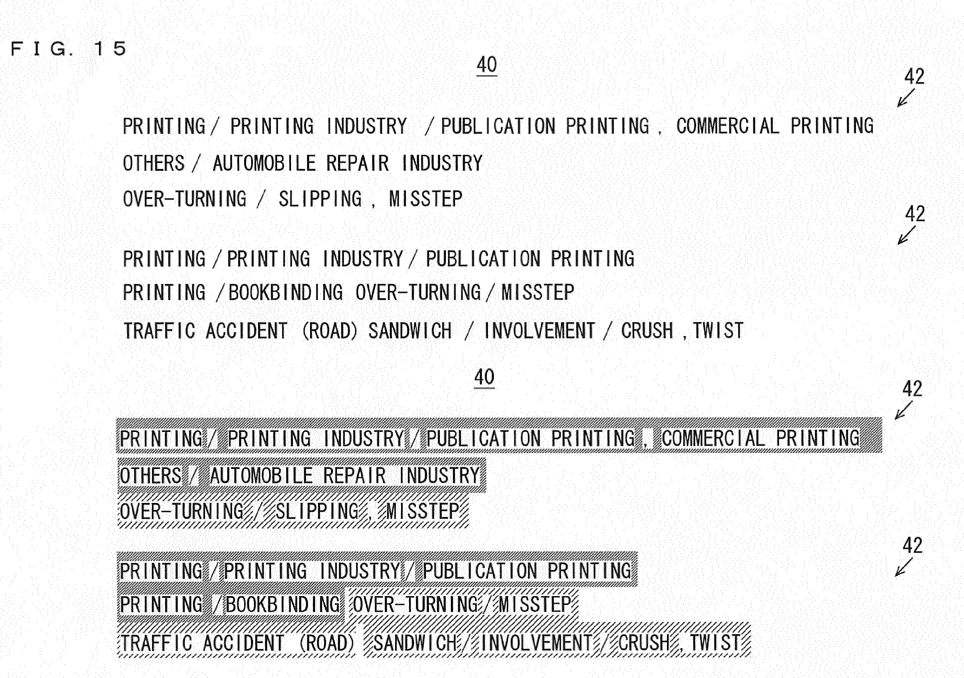

Figs. 14 and 15 are diagrams showing a third display example of the file field 42 of the result screen 40. As shown in Fig. 14, in the third display example, tag information that is organized in a line by type is displayed in each file field 42. In this case, the user can easily recognize the parent-child relationship among the labels of the tag information. As shown in an upper part of Fig. 15, display of a header of the tag information may be left out. As shown in a lower part of Fig. 15, the tag information of the same type may be displayed in the same color.

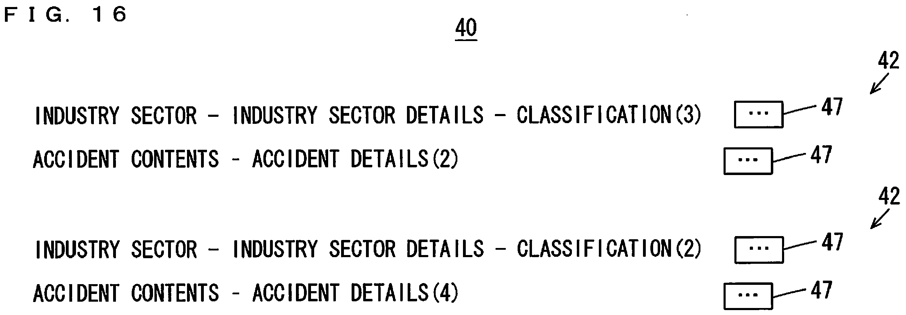

Fig. 16 is a diagram showing a fourth display example of the file field 42 of the result screen 40. As shown in Fig. 16, in the fourth display example, a button 47 is displayed in each file field 42 to correspond to the type of tag information. Each time the user operates the operation unit 150 to operate a desired button 47, an expanded display of the label of the tag information corresponding to the button 47 and cancelation of the display are alternately carried out.

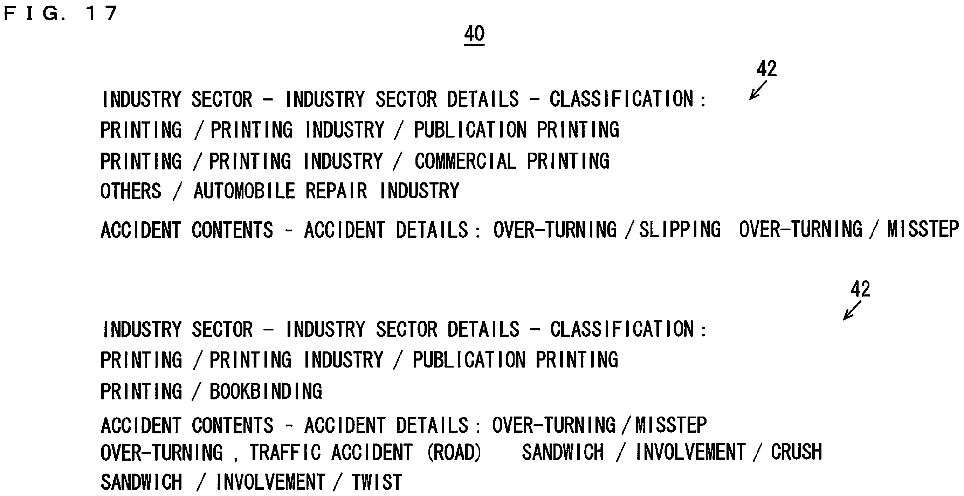

Fig. 17 is a diagram showing a fifth display example of the file field 42 of the result screen 40. In the fifth display example of Fig. 17, tag information that is organized in a line by type and segmentalized into a lowest item is displayed in each file field 42.

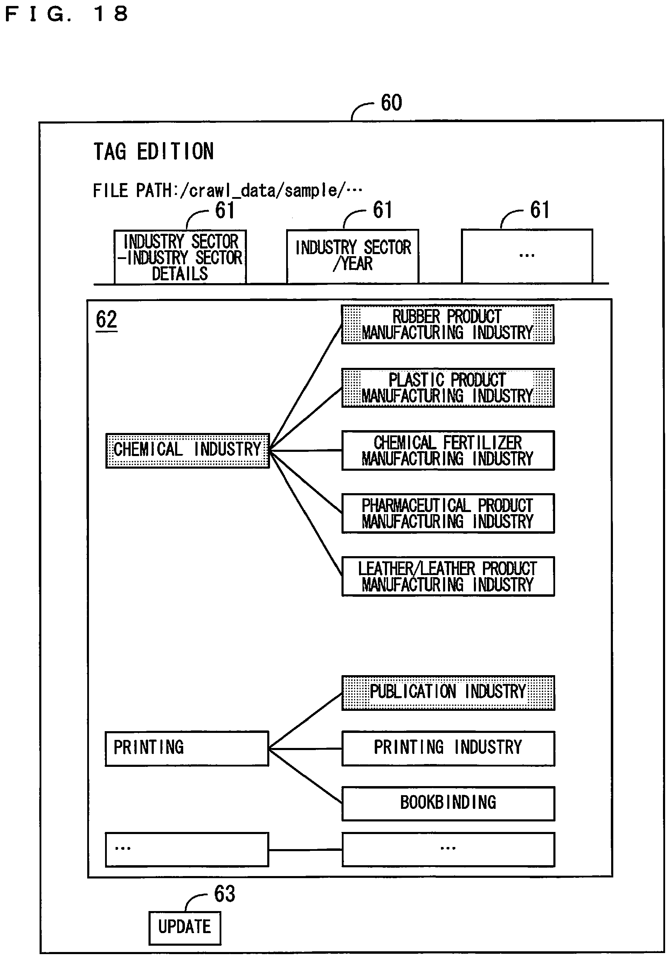

Fig. 18 is a diagram showing one example of the edition screen in a case where training data has the multi-label structure. The user operates the operation unit 150 to operate the edition icon 46 in the desired file field 42 of Fig. 10, so that an edition screen 60 of Fig. 18 is displayed as a pop-up screen. As shown in Fig. 18, the edition screen 60 includes a plurality of tabs 61, a tag edition field 62, and a button 63.

The plurality of tabs 61 correspond to a plurality of items of tag information, respectively. The user operates the operation unit 150 to operate a desired tab 61, so that the label of the item of the tag information corresponding to the tab 61 is displayed in a tree shape in the tag edition field 62. Each time the user operates a desired label using the operation unit 150, selection of the label and cancelation of the selection are alternately carried out. The selected label is colored with a background color and is thus distinguishably displayed. A plurality of labels can also be selected.

The user can carry out an operation for providing an instruction for edition such as addition, deletion or change of each selected label, similarly to the operation on the edition screen 50 of Fig. 11. The user operates the button 63 while providing the instruction for edition of each selected label, so that the label of the tag information that is selected and assigned to the selected document file is edited.

### (7) Tag Estimation Process

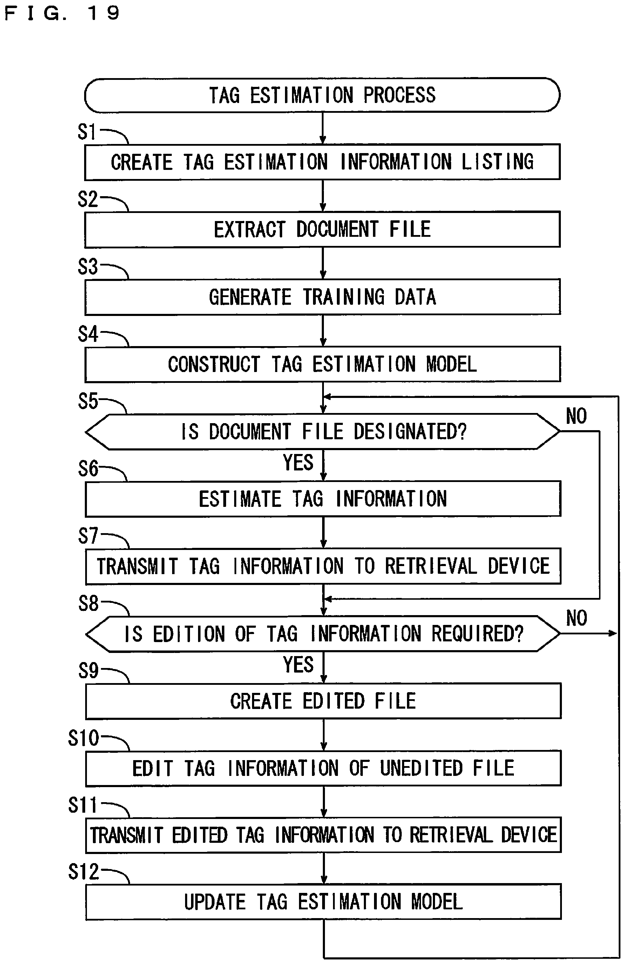

Fig. 19 is a flowchart showing a tag estimation process performed by the tag estimation device 10 of Fig. 2. The tag estimation process of Fig. 19 is performed by the CPU 130 of Fig. 1 executing the tag estimation program of the document retrieval support program stored in the ROM 120 or the like on the RAM 110. The tag estimation process will be described below using the flowchart of Fig. 19 together with the tag estimation device 10 of Fig. 2.

First, the creator 11 creates the tag information listing 101 based on the operation of the operation unit 150 by the user (step S1). Also, the extractor 12 extracts some of document files stored in the database storage device 170 based on the operation of the operation unit 150 by the user (step S2). Either step S1 or step S2 may be executed in advance.

Then, the training data acquirer 13 assigns the label of the tag information of the tag information listing 101 created in step S1 to the document files extracted in step S2 to generate training data (step S3). Subsequently, the constructor 14 acquires BERT on which learning has been carried out in advance using a large-scale corpus and makes the BERT learn using the training data generated in step S3, to construct a tag estimation model (step S4).

Thereafter, the estimator 15 determines whether a document file to be retrieved is designated (step S5). In a case where step S23 or step S37 in a retrieval process described below is executed, the estimator 15 determines that the document file is designated. In a case where the document file is not designated, the estimator 15 proceeds to step S8.

In a case where the document file is designated, the estimator 15 estimates tag information of the document file using the tag estimation model constructed in step S4 (step S6). Also, the estimator 15 transmits the tag information estimated in step S6 to the retrieval device 20 (step S7) and proceeds to step S8.

In step S8, the editor 16 determines whether edition of the tag information is required as to any of document files (step S8). In a case where step S31 in the retrieval process described below is executed, the editor 16 determines that the edition of the tag information is required. In a case where the edition of the tag information is not required, the editor 16 returns to step S5.

In a case where the edition of the tag information is required, the editor 16 edits the tag information assigned to the document file in accordance with the requirement, to create an edited file F1 (step S9). Also, the editor 16 edits the tag information of another unedited file F2 based on a threshold value of estimation probability (step S10).

Also, the editor 16 transmits the tag information edited in step S10 to the retrieval device 20 (step S11). Further, the editor 16 updates the tag estimation model constructed in step S4 based on a result of the edition in step S10 (step S12) and returns to step S5. Either step S11 or step S12 may be executed in advance.

### (8) Retrieval Process

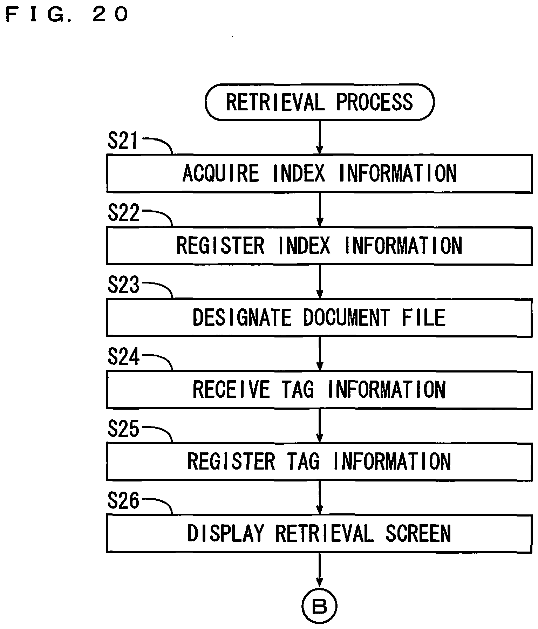

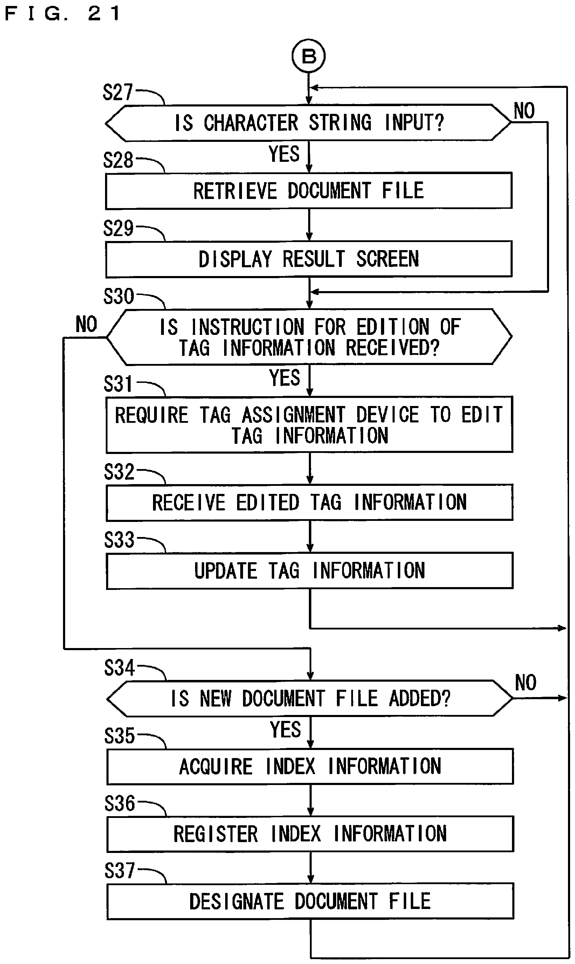

Figs. 20 and 21 are flowcharts showing the retrieval process performed by the retrieval device 20 of Fig. 2. The retrieval process of Figs. 20 and 21 is performed by the CPU 130 of Fig. 1 executing the retrieval program of the document retrieval support program stored in the ROM 120 or the like on the RAM 110. The retrieval process will be described below using the flowcharts of Figs. 20 and 21 together with the retrieval device 20 of Fig. 2.

First, the index acquirer 21 crawls the database storage device 170 to acquire index information except tag information of each document file (step S21). Then, the registrar 22 registers the index information acquired in step S21 in the retriever 24 (step S22).

Subsequently, the file acquirer 23 designates a document file to be retrieved based on the index information registered in step S22 (step S23). In this case, the tag information of the designated document file is estimated by sequential execution of steps S6, S7 of the aforementioned estimation process, and the estimated tag information is transmitted to the retrieval device 20.

The registrar 22 receives the tag information transmitted from the tag estimation device 10 (step S24). The registrar 22 also registers the tag information received in step S24 in the retriever 24 as a part of the index information of the document file designated in step S23 (step S25). Thereafter, the retriever 24 causes the display 160 to display the retrieval screen 30 of Fig. 9 (step S26).

Then, the retriever 24 determines whether a character string is input to the entry field 31 of the retrieval screen 30 (step S27). The retriever 24 may cause the display 160 to display the result screen 40 of Fig. 10 in place of the retrieval screen 30 in step S26. In this case, the retriever 24 determines whether a character string is input to the entry field 41 of the result screen 40 in step S27.

In a case where the character string is not input, the retriever 24 proceeds to step S30. In a case where the character string is input, the retriever 24 retrieves the document file, to which tag information matching the input character string is assigned (step S28). Subsequently, the retriever 24 causes the display 160 to display the result screen 40 indicating a result of the retrieval by step S28 (step S29) and proceeds to step S30. In step S30, the receiver 25 determines whether the instruction for edition of the tag information as to any of the document files is received from the result screen 40 displayed in step S29 (step S30).

In a case where the receiver 25 receives the instruction for edition of the tag information, the receiver 25 requires the tag estimation device 10 to edit the tag information assigned to the document file (step S31). In this case, the tag information assigned to a predetermined document file is edited in accordance with the requirement by sequential execution of steps S9 to S11 of the aforementioned estimation process, and the edited tag information is transmitted to the retrieval device 20.

The registrar 22 receives the edited tag information transmitted from the tag estimation device 10 (step S32). The registrar 22 also updates the tag information registered in step S25 to the edited tag information received in step S32 (step S33) and returns to step S27.

In a case where the receiver 25 does not receive the instruction for edition of the tag information in step S30, the receiver 25 proceeds to step S34. In step S34, the index acquirer 21 crawls the database storage device 170 to determine whether a new document file is added to the database storage device 170 (step S34). In a case where the new document file is not added, the index acquirer 21 returns to step S27.

In a case where the new document file is added, the index acquirer 21 acquires index information except for the tag information of the new document file (step S35). Then, the registrar 22 registers the index information acquired in step S35 in the retriever 24 (step S36). Subsequently, the file acquirer 23 designates the new document file as a retrieval target based on the index information registered in step S36 (step S37) and returns to step S27.

### (9) Effects

In the document retrieval support system 100 according to this embodiment, the training data, in which the tag information is assigned to some document files extracted from the plurality of document files to be retrieved, is acquired by the training data acquirer 13. The training data acquired by the training data acquirer 13 is applied to the Transformer machine learning model, on which learning has been carried out in advance using the corpus, so that the tag estimation model for estimating the tag information to be assigned to the document files is constructed by the constructor 14. The tag information is assigned to each of the plurality of document files to be retrieved by the registrar 22 using the tag estimation model constructed by the constructor 14.

In this document retrieval support system 100, since the leaning is carried out on the BERT as the Transformer machine learning model using the corpus, the tag information estimation model capable of estimating the tag information with high accuracy is constructed even in the case where the number of training data is small. In this case, it is unnecessary to acquire a large amount of training data. Thus, it is possible to assign the tag information to each of the plurality of document files to be retrieved using the tag information estimation model constructed using not all but some of the plurality of document files to be retrieved as the training data.

With this configuration, a user need not carry out an operation of assigning the tag information to a huge number of document files. Also, there is no expression fluctuation in the label of the tag information. As such, very little cost is generated for assignment, maintenance or consolidation of the tag information. This makes it possible to retrieve documents while suppressing an increase in cost. Also, since the tag information is immediately assigned to a newly created document file, it is possible to immediately retrieve the newly created document file.

The user inputs a desired character string to the entry field 31 of the retrieval screen 30 or the entry field 41 of the result screen 40, so that the user can easily utilize a document file matching the character string. Also, the user selects desired tag information displayed in the tag retrieval field 43 of the result screen 40, so that the user can easily utilize a document file to which the desired tag information is assigned.

Also, the user operates the edition icon 46 in the file field 42 of the result screen 40, so that the user easily provide an instruction for edition of the tag information assigned to a desired document file. Thus, even in a case where inappropriate tag information is assigned to a document file, the inappropriate tag information assigned to the document file can be appropriately revised. Moreover, in a case where tag information is edited, the tag estimation model is updated based on a result of the edition. Therefore, appropriate tag information can be easily assigned to the document file.

### (10) Other Embodiments

While the document retrieval support system 100 includes the storage 140, the operation unit 150, the display 160, and the database storage device 170 in the above-mentioned embodiment, embodiments are not limited to this. As far as the document retrieval support system 100 is connectable to the storage 140, the operation unit 150, the display 160, and the database storage device 170, the document retrieval support system 100 need not include some or all of the storage 140, the operation unit 150, the display 160, and the database storage device 170.

While the training data acquirer 13 assigns any of the tag information in the tag information listing 101 created by the creator 11 to some document files extracted by the extractor 12, to generate the training data, embodiments are not limited to this. The training data acquirer 13 may acquire the training data, in which the tag information is assigned to some document files extracted from the plurality of document files to be retrieved, from an external storage device or the like. In this case, the tag estimation device 10 need not include the creator 11 or the extractor 12.

### (11) Correspondences between Constituent Elements in Claims and Parts in Preferred Embodiments

In the following paragraphs, non-limiting examples of correspondences between various elements recited in the claims below and those described above with respect to various preferred embodiments of the present invention are explained. As each of various elements recited in the claims, various other elements having configurations or functions described in the claims can be also used.

In the above-mentioned embodiments, the training data acquirer 13 is an example of a training data acquirer, the constructor 14 is an example of a constructor, the registrar 22 is an example of the assigner, the document retrieval support system 100 is an example of a document retrieval support system. The creator 11 is an example of a creator, the extractor 12 is an example of an extractor, the result screen 40 is an example of a result screen, the retriever 24 is an example of a retriever, the receiver 25 is an example of a receiver, and the editor 16 is an example of an editor.

While preferred embodiments of the present disclosure have been described above, it is to be understood that variations and modifications will be apparent to those skilled in the art without departing the scope and spirit of the present disclosure. The scope of the present disclosure, therefore, is to be determined solely by the following claims.

## Claims

1. A document retrieval support system comprising:
a training data acquirer that acquires training data in which tag information is assigned to some document files extracted from a plurality of document files to be retrieved;
a constructor that constructs a tag estimation model for estimating tag information to be assigned to a document file by applying the training data acquired by the training data acquirer to a Transformer machine learning model on which learning has been carried out in advance using a corpus; and
an assigner that assigns the tag information to each of the plurality of document files to be retrieved using the tag estimation model constructed by the constructor.

2. The document retrieval support system according to claim 1, wherein the training data indicates a relationship between a content of a document file being an explanatory variable and tag information assigned to the document file being an objective variable, and
the tag estimation model is constructed by the Transformer machine learning model learning the relationship between the content of the document file and the tag information assigned to the document file based on the training data.

3. The document retrieval support system according to claim 1 or 2, wherein the Transformer machine learning model is BERT (Bidirectional Encoder Representations from Transformers).

4. The document retrieval support system according to any one of claims 1 to 3, further comprising:
a creator that creates a tag information listing indicating a listing of candidates of tag information to be assigned to the plurality of document files to be retrieved; and
an extractor that extracts some document files from the plurality of document files to be retrieved,
wherein the training data acquirer assigns any of the tag information in the tag information listing created by the creator to the document files extracted by the extractor, to generate the training data.

5. The document retrieval support system according to any one of claims 1 to 4, further comprising:
a retriever that receives, after the tag information is assigned to each of the plurality of document files to be retrieved by the assigner, an input of a character string, retrieves a document file matching the character string from the plurality of document files to be retrieved, and outputs a result screen indicating a result of the retrieval.

6. The document retrieval support system according to claim 5, wherein the result screen output by the retriever further displays tag information that is accessible in connection with the retrieved document file, and
the retriever retrieves a document file to which tag information selected by a user is assigned among the tag information displayed on the result screen, and outputs the result screen indicating the result of the retrieval.

7. The document retrieval support system according to claim 6, wherein the accessible tag information includes tag information assigned to the document file retrieved by the retriever and a candidate of tag information that belongs to a same hierarchy as a hierarchy of the assigned tag information.

8. The document retrieval support system according to any one of claims 5 to 7, further comprising:
a receiver that receives an instruction for edition of the tag information assigned to any of the plurality of document files to be retrieved; and
an editor that edits the tag information of the document file instructed to the receiver and also edits tag information of another document file to be retrieved,
wherein the assigner updates the tag information assigned to the document file to tag information edited by the editor.

9. The document retrieval support system according to claim 8, wherein the editor selectively edits the tag information of the document file to be retrieved based on a predetermined threshold value.

10. The document retrieval support system according to claim 8 or 9, wherein the result screen output by the retriever further displays GUI (Graphical User Interface) operated by the user, and
the receiver receives the instruction for the edition of the tag information assigned to any of the plurality of document files to be retrieved in response to the operated GUI.

11. The document retrieval support system according to any one of claims 8 to 10, wherein the editor updates the tag estimation model constructed by the constructor based on a result of the edition.

12. A document retrieval support method comprising:
acquiring training data in which tag information is assigned to some document files extracted from a plurality of document files to be retrieved;
constructing a tag estimation model for estimating tag information to be assigned to a document file by applying the acquired training data to a Transformer machine learning model on which learning has been carried out in advance using a corpus; and
assigning the tag information to each of the plurality of document files to be retrieved using the constructed tag estimation model.

13. A document retrieval support program executable by a processor,
the document retrieval support program causing the processor to execute:
a process of acquiring training data in which tag information is assigned to some document files extracted from a plurality of document files to be retrieved;
a process of constructing a tag estimation model for estimating tag information to be assigned to a document file by applying the acquired training data to a Transformer machine learning model on which learning has been carried out in advance using a corpus; and
a process of assigning the tag information to each of the plurality of document files to be retrieved using the constructed tag estimation model.
